Europäisches Patentamt

European Patent Office

Office européen des brevets

(19)

(11) Publication number: **0 328 724 B1**

# EUROPEAN PATENT SPECIFICATION

(45) Date of publication of patent specification: **28.09.94**

(51) Int. Cl.⁵: **B29B 7/06**, B01F 13/02, B29B 7/88, C08J 3/20

(21) Application number: **88111403.7**

(22) Date of filing: **15.07.88**

The file contains technical information submitted after the application was filed and not included in this specification

(54) **Process for producing a vinyl chloride resin composition for powder molding.**

(30) Priority: **25.01.88 JP 14061/88**

(43) Date of publication of application:
**23.08.89 Bulletin 89/34**

(45) Publication of the grant of the patent:
**28.09.94 Bulletin 94/39**

(84) Designated Contracting States:
**DE FR GB IT**

(56) References cited:
**EP-A- 0 023 963**
**DE-A- 1 454 878**
**DE-B- 1 193 016**
**GB-A- 939 821**
**GB-A- 982 506**

**Grant & Hackh's Chemical Dictionary, 4th Ed, p. 239, McGraw-Hill, 1987**

**Perry's Chemical Engineer's Handbook, 6th Ed, p. 20-58, McGraw-Hill, 1984**

(73) Proprietor: **CHISSO CORPORATION**
**6-32, Nakanoshima 3-chome**
**Kitaku**
**Osaka (JP)**

(72) Inventor: **Uemura, Katsuoki**
**91-16, Iwasaki**
**Ichiharashi Chibaken (JP)**
Inventor: **Ando, Masaru**
**17, Tatsumidai Higashi 2-chome**
**Ichiharashi Chibaken (JP)**

(74) Representative: **Hansen, Bernd, Dr.rer.nat. et al**
**Hoffmann, Eitle & Partner**
**Patentanwälte**
**Postfach 81 04 20**
**D-81904 München (DE)**

EP 0 328 724 B1

**Description**

BACKGROUND OF THE INVENTION

1. Field of the Invention

This invention relates to a process for producing a vinyl chloride resin composition for powder molding. More particularly it relates to a process for producing a vinyl chloride resin composition for powder molding, which process, even in the case of powder molding using a mold having a complicated shape and a pattern of fine projections and depressions, affords a molded product faithfully duplicating the shape and the pattern and also having a uniform thickness.

2. Description of the Related Art

Recently, various molding processes and coating processes such as rotational molding process, slush molding process, fluidized bed dip coating process, electrostatic coating process, etc. (these molding processes and coating processes hereinafter being collectively referred to as powder molding process) using powdery thermoplastic resin compositions have been broadly employed. Further, powdery vinyl chloride resin compositions have also been used for the powder molding.

Heretofore, as a process for producing powdery vinyl chloride resin compositions for powder molding (hereinafter referred to as powdery PVC composition), there has generally been carried out a process wherein a powdery vinyl chloride resin, a plasticizer and various necessary additives, each in a definite quantity were introduced into a high-speed agitating mixer such as Henschel mixer (tradename), super mixer, etc. provided with a jacket for heating and cooling, followed by raising the resin temperature inside the mixer up to about 130°C with stirring by passing hot water or steam through the inside of the jacket, to have the plasticizer absorbed in the powdery vinyl chloride resin, cooling the resin temperature inside the mixer down to about room temperature by passing cooling water through the inside of the jacket, then adding a definite quantity of a vinyl chloride emulsion polymer (hereinafter referred to as emulsion polymer) to the mixture inside in the mixer in order to improve the powder flowability, again agitating the mixture in the vicinity of room termperature to coat the surface of the powdery vinyl chloride resin with the emulsion polymer and taking out the resulting material to obtain a powdery PVC composition (cf. e.g. Japanese Patent Application laid-open No. Sho 59-161456/1984).

One of properties required for the powdery PVC composition for the powder molding consists in that the respective particles of the powdery PVC composition should be present in discrete manner without adhering or agglomerating to one another and abundant in the powder flowability. If the agglomeration of the particles is notable, the powder flowability becomes inferior, and if such a powdery PVC composition is used, it is impossible in the powder molding using a mold having a complicated shape and a pattern of fine projections and depressions to obtain a molded product faithfully duplicating the shape and the pattern of the mold surface and having a uniform thickness, and moreover if such a powdery PVC composition is stored, the powder particles often adhere tightly to one another into a lump to lose the powder flowability and thereby be unable to use the composition for powder molding.

Thus, the powdery PVC composition obtained according to a conventional production process is still unsatisfactory in the aspect of powder flowability.

The present inventors have made extensive research on a process for producing a powdery PVC composition having improved the powder flowability. As a result, we have found that the adhesion and agglomeration of the particles among one another deteriorating he powder flowability are caused by fine particles (average particle size: 100 μ or less) present in the powdery PVC composition; hence by reducing the quantity of such fine particles present, the powder flowability of the resulting powdery PVC composition is notably improved, and have achieved the present invention.

SUMMARY OF THE INVENTION

As apparent from the foregoing, the object of the present invention is to provide a process for producing a vinyl chloride resin composition suitable for powder molding and having a superior powder flowability.

The present invention resides in a process for producing a vinyl chloride resin composition for powder molding by mixing a vinyl chloride resin, a plasticizer and an additive(s) in a mixer, said process comprising the following steps (A), (B) and (C): (A) a step for feeding a powdery vinyl chloride resin, a plasticizer and an additive(s) into an agitating mixer provided with a jacket and mixing these materials by stirring whilst heating them in a temperature range of 120 to 130° C; (B) a cooling step for cooling the resulting materials in the mixer down to a temperature of 70°C or lower; and (C) a step for the further addition of a vinyl chloride emulsion polymer to the mixture and for mixing the resulting materials by stirring at a temperature of 70°C or lower, characterized in that a gas is blown in said mixer at at least one of said steps (A) and (B), or (A), (B) and (C), during the mixing of the contents of said mixer by stirring.

BRIEF DESCRIPTION OF THE DRAWING

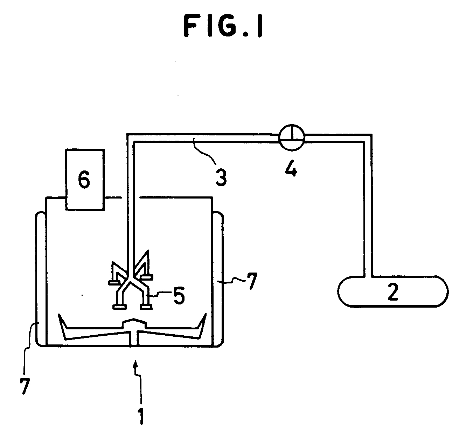

Fig. 1 shows a schematic view illustrating the production line of the present invention wherein numeral
1: 20 ℓ capacity Henschel mixer (tradename),
2: compressor,       3: gas-introducing pipe,
4: regulator,       5:gas-blowing-in port,
6: gas-discharging port and dust collector, and
7:jacket for heating and cooling.

DETAILED DESCRIPTION OF PREFERRED EMBODIMENTS

The mixing means used in the production process of the present invention, as illustrated in Fig. 1, is an agitating mixer provided with a jacket for heating and cooling and also has a gas-blowing-in port and a gas-discharging port. A mixing means consisting of a high-speed agitating mixer such as Henschel mixer (tradename), super mixer, etc. provided with the above-mentioned gas-blowing-in port and a gas-discharging port (hereinafter referred to merely as mixer) is preferred. As to the gas-blowing-in port, it is necessary to provide it in a number of one or more, preferably about 2 to 6 inside the mixer, and the position of the gas-blowing-in port(s) provided inside the mixer has no particular limitation, but it is preferred to provide the port(s) so that a gas can be blown in the mixer from the central upper part of the mixer just downwards or so that a gas can be blown starting from the vicinity of the central bottom part of the mixer, then along the bottom part and thereafter upwards along the lateral surface of the mixer.

Examples of the gas used in the present invention are air, nitrogen gas, $CO_2$ gas, helium gas, argon gas, etc., but in view of commercial availability and economy, it is preferred to use air, nitrogen gas or $CO_2$ gas. Further, use of nitrogen gas or $CO_2$ gas has an advantage of preventing the deterioration of the composition due to oxidation. As to the pressure and quantity of the gas blown, it is necessary to adjust them depending on the capacity of the mixer used and the quantity of used powdery vinyl chloride resin fed and the bulk density thereof. In general, the higher the pressure of the gas blown or the larger the quantity thereof blown, the better the floating of the powdery vinyl chloride resin inside the mixer, but if the pressure thereof blown is too high or the quantity thereof blown is too large, a balance between the rotary motion of the powdery vinyl chloride resin brought about by the agitating blades inside the mixer and the floating motion of the resin brought about by the blown-in gas becomes inferior to make it impossible to effect a good spiral flowing motion, and moreover the heating rate at which the inside of the mixer is heated is lowered to make the operating efficiency inferior. Further, to the contrary, if the pressure thereof blown is too low or the quantity thereof blown is too small, the floating motion inside the mixer does not occur, but only a mere rotary motion by means of agitating blades results. In general, when the number of revolutions of the agitating blades of the mixer is 1,000 rpm and the powdery vinyl chloride resin is fed in a quantity of 0.5 ℓ per ℓ of the capacity of the mixer, the pressure of the gas blown per ℓ of the capacity of the mixer is in the range of 0.005 to 2Kg/cm$^2$G, preferably 0.1 to 0.8 Kg/cm$^2$G and the quantity thereof blown is in the range of 1 to 1,000 nℓ/min., preferably 5 to 200 nℓ/min. The above expression G stands for Gauge-pressure and refers to the difference between the absolute pressure and the atmospheric pressure. The letter n means "normal state" and refers the above volume ℓ to the standard state.

According to the production process of the present invention, the above-mentioned mixer provided with a jacket for heating and cooling is provided with gas-blowing-in ports and a gas-discharging port as illustrated in Fig. 1, followed by introducing powdery vinyl chloride resin and definite quantities of plasticizer, heat stabilizer, lubricant, pigment, etc. into the mixer, agitating the mixture while passing steam through the inside of the jacket to heat the contents inside the mixer up to 130°C, continuing agitation for 10 to 40 minutes, preferably 10 to 30 minutes while keeping the temperature so as not to surpass 130°C to sufficiently have the plasticizer absorbed in the powdery vinyl chloride resin (these operations being referred to as the first stage). At the heating step of the first stage, it is necessary to prevent the temperature of the contents in the mixer from surpassing 130°C. If the contents are heated above 130°C, the powdery vinyl chloride resin as the contents causes gelation; hence it is necessary to pay attention to

3

such an excess heating. Whereas if the temperature is low, the absorption rate of the plasticizer is so slow that the operating efficiency lowers and also a portion of the plasticizer not absorbed in the vinyl chloride resin remains on the surface of the vinyl chloride resin particles to inhibit the powder flowability of the resulting powdery PVC composition. Thus the temperature is preferred to be kept within a range of 115° to 125°C. At this first stage, if the quantity of the gas blown is too large, the heating efficiency is notably reduced to make the operating efficiency inferior; hence the quantity of the gas blown is preferred to be as small as possible. When the mixing on heating at the first stage has been completed, the contents inside the mixer are rapidly cooled down to 70°C or lower, preferably 50°C or lower. This step is referred to as the second stage. As to the mixer used at this second stage, the mixer used at the first stage may be used as it is, or another mixer may be used. Its cooling is carried out by passing cooling water through the inside of the jacket of the mixer. At that time, in order to enhance the cooling efficiency inside the mixer, it is preferred to raise the pressure and quantity of the gas blown as much as possible since the cooling time is thereby shortened to improve the operating efficiency. After completion of the cooling operation at the second stage, an emulsion polymer is added into the mixer in a definite quantity (usually 5 to 20 parts by weight of the emulsion polymer based on 100 parts by weight of the powdery vinyl chloride resin), followed by further mixing these with stirring for 2 to 10 minutes to coat the particle surface of the powdery PVC composition inside the mixer with the emulsion polymer. This step is referred to as the third stage. When the particle surface is coated with the emulsion polymer at the third stage, it is necessary to keep the temperature of the contents inside the mixer at 70°C or lower. If the temperature exceeds 70°C, the plasticizer once absorbed in the powdery vinyl chloride resin exudes out through the clearances between the coated emulsion polymer particles to notably bake inferior the powder flowability of the resulting powdery PVC composition. Further, the average particle size of the emulsion polymer is preferred to be $1/10$ or less of the average particle size of the powdery vinyl chloride resin.

In the production process of the present invention, the gas blowing-in may be carried out throughout all of the first stage to the third stage, but it is important to carry out the blowing necessarily at at least the first stage and the second stage.

The powdery vinyl chloride resin used in the present invention refers to vinyl chloride homopolymer and vinyl chloride copolymers obtained by copolymerizing vinyl chloride with 40 parts by weight or less, preferably 30 parts by weight or less based on 100 parts by weight of vinyl chloride, of at least one monomer copolymerizable therewith selected from ethylene, propylene, butene-1, pentene-1, vinyl acetate, dialkyl maleates the alkyl group of which has 1 to 12 carbon atoms, dialkyl fumarates the alkyl group of which has 1 to 12 carbon atoms, vinyl esters of carboxylic acids such as caproic acid, caprylic acid, benzoic acid, etc., vinylidene chloride, alkyl vinyl ethers the alkyl group of which has 1 to 16 carbon atoms, etc., in the presence of a polymerization initiator. As to the vinyl chloride homopolymer or copolymers, those having a porous particle structure are preferred for improving the absorptivity of plasticizers and usually those produced according to suspension (co)polymerization process or bulk (co)polymerization process and having an average particle size of 100 to 200 μm are preferred to use.

The plasticizer used in the production process of the present invention has no particular limitation as far as it is usable for vinyl chloride resins, and examples thereof are dialkyl phthalates, dialkyl adipates, trialkyl trimellitates, dialkyl sebacates, dialkyl azelates, alkylbenzyl phthalates, trialkyl phosphates, alkyl aryl phosphates, the alkyl group of the foregoing compounds having 4 to 13 carbon atoms, polyesters, etc. Concrete examples thereof are di-n-butyl phthalate, di-n-octyl phthalate, di-2-ethylhexyl phthalate (DOP), diisooctyl phthalate, octyl decyl phthalate, diisodecyl phthalate, butyl benzyl phthalate, di-2-ethylhexyl isophthalate, di-2-ethylhexyl adipate (DOA), di-n-decyl adipate, diisodecyl adipate, tri-2-ethylhexyl trimellitate, 2-ethylhexyl azelate, dibutyl sebacate, di-2-ethylhexyl sebacate, tributyl phosphate, tri-2-ethylhexyl phosphate, 2-ethylhexyl diphenyl phosphate, tricresyl phosphate, etc., and these may be used alone or in admixture.

Further, as the additives used in the production process of the present invention, various stabilizers, coloring agents, lubricants, inorganic fillers, secondary plasticizers usually added to vinyl chloride resins may be used within ranges where the powder flowability is not damaged.

The present invention will be described in more detail by way of Examples and Comparative examples, but it should not be construed to be limited thereto.

In addition, the measurement methods employed in Examples and Comparative examples are as follows:

(1) Measurement of angle of repose:

The powdery composition is dropped through a funnel provided with a damper for measurement of bulk density (JIS-K-6721), followed by filling it in a cylindrical pipe (55 mm in diameter and 50 mm high) located just below the funnel, and then rapidly holding up the pipe vertically so that the powdery composition collapses into a mountain form. The angle of repose of the mountain is then measured.

(2) Measurement of dropping speed:

The powdery composition (120 mℓ) is introduced into a funnel provided with a damper for measurement of bulk density (JIS-K-6721), followed by measuring the time during which the total quantity thereof has dropped from the hopper of the funnel. This time is calculated into a time during which 100 mℓ of the powdery composition has dropped.

(3) Measurement of bulk density:

According to JIS-K-6721.

(4) Coating uniformity of molded product:

An iron plate (50 × 100 × 3.2 mm) having its surface subjected to plating treatment is preheated for 10 minutes in an oven heated to 230°C, followed by rapidly taking out the plate, scattering the powdery composition onto the iron plate, baking the resulting plate for 5 seconds , sweeping off unmelted excess powdery composition, again rapidly returning it into the above oven, further heating it for 2 minutes, completely melting the powdery composition on the iron plate to form a resin coating on the iron plate and stripping off the resin-coating to use it as samples. The respective thicknesses of the samples are subjected to six points measurement to obtain the average values and the deviation values. The evaluation was carried out by classifying values in terms of the deviation value/the average value into the following 4 stages:

◎        indicates the case where the values are less than $8 \times 10^{-2}$ $mm^{-1}$.

○        indicates the case where the values are $8 \times 10^{-2}$ to $15 \times 10^{-2}$ $mm^{-1}$.

△        indicates the case where the values are $0.15 \times 10^{-2}$ to $25 \times 10^{-2}$ $mm^{-1}$.

X        indicates the case where the values exeed $25 \times 10^{-2}$ $mm^{-1}$.

(5) Duplicativity relative to mold:

The powdery composition is baked in the same manner as in the above paragraph (4) onto a flat plate mold (250 × 250 × 9 mm) having a complicated design applied thereonto, to form a resin coating, and to what faithful extent the resulting resin coating could duplicate the design of the mold was observed by naked eyes. The results were evaluated according to the following four stages:

◎        indicates "good".

○        indicates "somewhat good".

△        indicates "somewhat inferior".

X        indicates "far inferior".

(6) Antistatic properties:

The powdery composition (20 g) was sealed in a polyethylene bag (50 × 100 mm), followed by vigorously shaking the bag. As a result, particles liable to be charged or those having a strong adhesion adhered onto the inner surface of the polyethylene bag. The state was observed by naked eyes and evaluated based on the following four stages:

◎        indicates "good".

○        indicates "somewhat good".

△        indicates "somewhat inferior".

X        indicates "far inferior".

(7) Measurements of angle of repose and dropping speed after one month:

The powdery composition was allowed to stand for one month after its production, and its angle of repose after one month was measured in the same manner as in the above paragraph (1) and the dropping speed after one month, in the same manner as in the above paragraph (2).

(8) Particle size distribution:

The respective samples to be measured (10 g) were introduced into a sieve-shaking machine manufactured by Iida Seisakusho Company and provided with 6 kinds of sieves of 350 $\mu$m, 210 $\mu$m, 177 $\mu$m, 149 $\mu$m, 105 $\mu$m and 74 $\mu$m in nominal size, followed by shaking them for 10 minutes and calculating the percentage by weight of resins having passed through the respective sieves to measure the particle size distribution.

(9) Average particle size:

The particle size in which 50% by weight of the sample is passed through the sieves is referred to as the average particle size D 50.00.

(10) Geometrical standard deviation ($\sigma$1):

The particle size in which 84.13% by weight of the sample is passed through the sieves is referred to as D 84.13. A value obtained by dividing D 84.13 by D 50.00 is referred to as a geometrical standard deviation value ($\sigma$1). The closer this value to 1.00, the sharper the distribution, while the more deviated the value from 1.00, the broader the distribution. Namely, the deviation value is a value expressing the distribution state on the side where the particle diameter is larger than the average particle diameter.

(11) Geometrical standard deviation ($\sigma$2):

The particle size in which 15.87% by weight of the sample is passed through the sieves is referred to as D 15.87 and a value obtained by dividing this D 15.87 by D 50.00 was rendered as a geometrical deviation value ($\sigma$2). The closer this value to 1.00, the sharper the distribution, while the more deviated the value from 1.00, the broader the distribution. Namely, the value is a value expressing the distribution state where the particle diameter is smaller than the average particle size.

(12) ($\sigma$1) - ($\sigma$2):

This value expresses the distribution state of the sample as a whole. The closer this numeral value to 0.0, the sharper the distribution, while the larger the value, the broader the distribution.

Examples 1 to 5 and Comparative examples 1 to 4

A powdery vinyl chloride resin (vinyl chloride homopolymer; a suspension-polymerized product) having powder properties indicated in Table 2 described later and an average polymerization degree of 800 (3 Kg), a Ba-Zn-based stabilizer (150 g), an epoxidized soybean oil (150 g), a mixed phthalate plasticizer prepared from alcohols of carbon numbers 9, 10 and 11 and phthalic anhydride (2,250 g) and a black pigment (60 g) were introduced into a 20 ℓ capacity mixer provided with a gas-blowing-in port and a gas-discharging port as shown in Fig. 1, followed by heating the contents inside the mixer up to 120°C with stirring at a revolution number of agitating blades of 1,000 rpm while blowing air therein as described in Table 1 and thereafter mixing them with stirring for 10 minutes while keeping the temperature at 115° to 120°C (a first stage). Thereafter the contents were cooled down to 50°C or lower with stirring (a second stage). At that time, air was blown therein as described in Table 1 mentioned later except for Comparative example 3, followed by adding an emulsion polymer having an average polymerization degree of 1,000 and an average particle size of 1.3 $\mu$m (360 g), and then mixing these with stirring for 5 minutes to coat the surface of the powdery vinyl chloride resin particles with the emulsion polymer (a third stage). At that time, air was blown therein as described in Table 1 mentioned later except for Example 5 and Comparative examples 1 and 4. Thereafter the contents in the mixer were taken out to obtain a powdery PVC composition.

Further, Comparative example 1 was carried out in the same manner as in Examples 1 to 5 and Comparative examples 2 to 4 except that no air was blown therein at any of the first, second and third stages to obtain a powdery PVC composition

With the powdery PVC compositions obtained in the above Examples and Comparative example, their powder characteristics and powder-moldabilities were measured. The results are shown in Table 2.

Table 1

| Mixing conditions / Experiment No. | (First stage) | | | | (Second stage) | | | | (Third stage) | | |
|---|---|---|---|---|---|---|---|---|---|---|---|
| | Air blowing | Air source press. kg/cm² | Air amount nℓ/min | Time required (min.) | Air blowing | Air source press. kg/cm² | Air amount nℓ/min | Time required (min.) | Air blowing | Air source press. kg/cm² | Air amount nℓ/min |
| Example-1 | Yes | 3.0 | 130 | 18 | Yes | 10.0 | 240 | 15 | Yes | 2.0 | 105 |
| Example-2 | Yes | 5.0 | 170 | 21 | Yes | 10.0 | 240 | 14 | Yes | 2.0 | 105 |
| Example-3 | Yes | 3.0 | 130 | 17 | Yes | 5.0 | 170 | 24 | Yes | 2.0 | 105 |
| Example-4 | Yes | 3.0 | 130 | 18 | Yes | 3.0 | 130 | 29 | Yes | 2.0 | 105 |
| Example-5 | Yes | 3.0 | 130 | 19 | Yes | 10.0 | 240 | 15 | No | — | — |
| Comp. ex.-1 | No | — | — | 15 | No | — | — | 41 | No | — | — |
| Comp. ex.-2 | No | — | — | 15 | Yes | 10.0 | 240 | 15 | Yes | 2.0 | 105 |
| Comp. ex.-3 | Yes | 3.0 | 130 | 18 | No | — | — | 42 | Yes | 2.0 | 105 |
| Comp. ex.-4 | Yes | 3.0 | 130 | 18 | No | — | — | 40 | No | — | — |

7

Table 2

| Measurement items | | V.C. resin | Example 1 | Example 2 | Example 3 | Example 4 | Example 5 | Compar. ex.1 | Compar. ex.2 | Compar. ex.3 | Compar. ex.4 |
|---|---|---|---|---|---|---|---|---|---|---|---|
| Angle of repose (degree) | | 33.0 | 35.3 | 35.5 | 36.2 | 36.5 | 35.6 | 38.3 | 36.5 | 36.9 | 35.9 |
| Dropping speed (sec/100ml) | | 11.8 | 13.5 | 13.2 | 14.2 | 14.5 | 14.0 | 16.4 | 14.6 | 15.0 | 14.8 |
| Bulk density (g/ml) | | 0.505 | 0.536 | 0.539 | 0.531 | 0.527 | 0.535 | 0.502 | 0.529 | 0.522 | 0.528 |
| Coating uniformity of molded product | | - | ◎ | ◎ | ◎ | ○ | ○ | △ | ○ | △ | △ |
| Duplicativity relative to mold | | - | ◎ | ◎ | ○ | ○ | ○ | △ | ○ | ○ | ○ |
| Antistatic properties | | - | ○ | ○ | ○ | ○ | △ | △ | ○ | △ | △ |
| One month after allowed to stand | Angle of repose (degree) | 33.3 | 35.5 | 35.8 | 36.4 | 36.4 | 36.4 | 39.1 | 36.8 | 37.0 | 35.9 |
| | Dropping speed (sec/100ml) | 12.2 | 13.4 | 13.4 | 14.0 | 14.3 | 14.7 | 17.3 | 14.5 | 14.9 | 15.2 |
| Particle size distribution (wt%) | More than 350 µm | 0.0 | 0.0 | 0.0 | 0.0 | 0.0 | 0.00 | 0.5 | 0.0 | 0.0 | 0.0 |
| | 210µm~350µm | 0.1 | 7.7 | 5.7 | 8.4 | 9.8 | 5.7 | 14.3 | 8.7 | 7.2 | 8.5 |
| | 177µm~210µm | 21.8 | 11.0 | 10.0 | 11.2 | 14.3 | 14.1 | 15.4 | 14.8 | 20.2 | 16.6 |
| | 149µm~177µm | 28.0 | 42.4 | 47.4 | 40.2 | 33.4 | 41.8 | 21.6 | 33.9 | 27.3 | 30.7 |
| | 105µm~149µm | 43.0 | 35.4 | 34.1 | 36.3 | 38.1 | 33.5 | 36.0 | 35.0 | 36.5 | 35.4 |
| | 74µm~105µm | 5.1 | 3.0 | 2.3 | 3.3 | 3.9 | 3.7 | 8.7 | 6.4 | 7.3 | 7.5 |
| | Less than 74 µm | 1.8 | 0.5 | 0.5 | 0.6 | 0.5 | 1.2 | 3.5 | 1.2 | 1.5 | 1.3 |
| Average particle size (µm) | | 149 | 156 | 157 | 156 | 155 | 157 | 151 | 155 | 154 | 154 |
| Geometric standard deviation ($\sigma_1$) | | 1.250 | 1.187 | 1.129 | 1.206 | 1.262 | 1.188 | 1.373 | 1.251 | 1.273 | 1.266 |
| Geometric standard deviation ($\sigma_2$) | | 0.765 | 0.770 | 0.778 | 0.761 | 0.761 | 0.762 | 0.723 | 0.744 | 0.738 | 0.737 |
| ($\sigma_1$)-($\sigma_2$) | | 0.485 | 0.417 | 0.351 | 0.439 | 0.501 | 0.426 | 0.649 | 0.507 | 0.535 | 0.529 |

When the production process of the present invention is employed, the resulting powdery PVC composition has a sharp particle size distribution and a powdery composition containing an extremely small quantity of fine particles is obtained. As a result, the powder flowability is notably improved as seen from its angle of repose, dropping speed, etc., and molded products obtained from this powdery PVC composition has a uniform thickness and even when a mold having a complicated shape and a pattern of fine projection and depression parts is employed, it is possible to duplicate the pattern faithfully.

In addition, the composition is durable to a long time storate and improvement in the operating efficiency can be achieved.

**Claims**

1. A process for producing a vinyl chloride resin composition for powder molding by mixing a vinyl chloride resin, a plasticizer and an additive(s) in a mixer (1), said process comprising the following steps (A), (B) and (C):

    (A) a step for feeding a powdery vinyl chloride resin, a plasticizer and an additive(s) into an agitating mixer (1) provided with a jacket (7) and mixing these materials by stirring whilst heating them in a temperature range of 120 to 130° C;

    (B) a cooling step for cooling the resulting materials in the mixer (1) down to a temperature of 70° C or lower; and

    (C) a step for the further addition of a vinyl chloride emulsion polymer to the mixture and for mixing the resulting materials by stirring at a temperature of 70° C or lower, characterized in that a gas is blown in said mixer (1) at at least steps (A) and (B) during the mixing of the contents of said mixer (1) by stirring.

2. A process according to claim 1 wherein said mixer is provided with agitating blades therein, and when the number of revolutions thereof is 1,000 rpm and said vinyl chloride resin is introduced in said mixer in a proportion of 0.5 ℓ per ℓ of the capacity of said mixer, the quantity of said gas blown in said mixer is in the range of 1 to 1,000 nℓ/min. per ℓ of the capacity of said mixer and the pressure of said gas blown therein is in the range of 0.005 to 2 Kg/cm$^2$G.

3. A process according to claim 2 wherein the quantity of said gas blown in said mixer is in the range of 5 to 200 nℓ/min. per ℓ of the capacity of said mixer and the pressure of said gas blown therein is in the range of 0.1 to 0.8 Kg/cm$^2$G.

4. A process according to claim 1 wherein said gas blown in said mixer is air or nitrogen gas.

**Patentansprüche**

1. Verfahren zum Herstellen einer Vinylchloridharz-Zusammensetzung zum Pulverschmelzen durch Mischen eines Vinylchloridharzes, eines Weichmachers und eines Additivs (Additive) in einem Mischgerät (1), wobei das Verfahren die folgenden Stufen (A), (B) und (C) umfaßt:

    (A) eine Stufe zum Zuführen eines pulverigen Vinylchloridharzes, eines Weichmachers und eines Additivs (Additive) in ein Rührmischgerät (1), welches mit einem Mantel (7) versehen ist, und Mischen dieser Materialien unter Rühren, während sie in einem Temperaturbereich von 120 bis 130° C erhitzt werden;

    (B) eine Abkühlungsstufe zum Abkühlen der sich ergebenden Materialien in dem Mischgerät (1) auf eine Temperatur von 70° C oder weniger; und

    (C) eine Stufe für die weitere Zugabe eines Vinylchloridemulsionspolymeren zu der Mischung und zum Mischen der sich ergebenden Materialien durch Rühren bei einer Temperatur von 70° C oder weniger, dadurch gekennzeichnet, daß ein Gas in das Mischgerät (1) in mindenstens den Stufen (A) und (B) während das Mischens des Inhalts des Mischgerätes (1) durch Rühren eingeblasen wird.

2. Verfahren nach Anspruch 1, wobei das Mischgerät mit Rührblättern versehen wird, und wenn die Anzahl der Umdrehungen davon 1.000 Umdrehungen pro Minute beträgt, und das Vinylchloridharz in das Mischgerät in einem Anteil von 0,5 l pro l Kapazität des Mischgeräts eingebracht wird, liegt die Menge des in das Mischgerät eingeblasenen Gases im Bereich von 1 bis 1.000 nl/min pro l Kapazität des Mischgerätes, und der Druck des darin eingeblasenen Gases liegt im Bereich von 0,005 bis 2 kg/cm$^2$G.

3. Verfahren nach Anspruch 2, wobei die Menge des in das Mischgerät eingeblasenen Gases im Bereich von 5 bis 200 nl/min pro Liter Kapazität des Mischgerätes liegt, und der Druck des darin eingeblasenen Gases im Bereich von 0,1 bis 0,8 kg/cm$^2$G liegt.

**4.** Verfahren nach Anspruch 1, wobei das in das Mischgerät eingeblasene Gas Luft oder Stickstoffgas ist.

**Revendications**

**1.** Procédé pour fabriquer une composition de résine de chlorure de vinyle pour moulage à partir de poudres en mélangeant une résine de chlorure de vinyle, un plastifiant et un ou plusieurs additifs dans un mélangeur (1), ledit procédé comprenant les étapes (A), (B) et (C) suivantes :

(A) une étape pour introduire une résine de chlorure de vinyle en poudre, un plastifiant et un ou plusieurs additifs dans un mélangeur agitateur (1) équipé d'une chemise (7) et pour mélanger ces matières par agitation tout en les chauffant dans une gamme de température de 120 à 130°C;

(B) une étape de refroidissement afin de refroidir les matières obtenues dans le mélangeur (1) jusqu'à une température de 70°C ou moins; et

(C) une étape pour ajouter en outre au mélange un polymère en émulsion de chlorure de vinyle et pour mélanger les matières obtenues par agitation à une température de 70°C ou moins,

caractérisé en ce qu'un gaz est introduit dans ledit mélangeur (1) lors d'au moins les étapes (A) et (B) au cours du mélange des contenus dudit mélangeur (1) par agitation.

**2.** Procédé selon la revendication 1, dans lequel ledit mélangeur comporte des pales d'agitation, et lorsque son nombre de révolutions est de 1 000 tours/minute, et que ladite résine de chlorure de vinyle est introduite dans ledit mélangeur dans une proportion de 0,5 $\ell$ par $\ell$ de la capacité dudit mélangeur, la quantité dudit gaz introduit dans ledit mélangeur est dans la gamme 1 à 1 000 n$\ell$/mn par $\ell$ de la capacité dudit mélangeur et la pression dudit gaz introduit est dans la gamme de 0,005 à 2 kg/cm²G.

**3.** Procédé selon la revendication 2, dans lequel la quantité dudit gaz introduit dans ledit mélangeur est dans la gamme de 5 à 200 n$\ell$/mn par $\ell$ de la capacité dudit mélangeur et la pression dudit gaz introduit est dans la gamme de 0,1 à 0,8 kg/cm²G.

**4.** Procédé selon la revendication 1, dans lequel ledit gaz introduit dans ledit mélangeur est l'air ou l'azote gazeux.

# FIG.1